Europäisches Patentamt

European Patent Office

Office européen des brevets

(19)

(11) Publication number: **0 143 275**
**B1**

## (12) EUROPEAN PATENT SPECIFICATION

(45) Date of publication of patent specification: **22.06.88**

(51) Int. Cl.⁴: **C 21 C 5/56, F 27 D 13/00**

(21) Application number: **84111767.4**

(22) Date of filing: **02.10.84**

(54) **Device for preheating of scrap in an electric arc steel furnace.**

(30) Priority: **03.10.83 SE 8305421**

(43) Date of publication of application:
**05.06.85 Bulletin 85/23**

(45) Publication of the grant of the patent:
**22.06.88 Bulletin 88/25**

(84) Designated Contracting States:
**AT BE CH DE FR GB IT LI LU NL SE**

(56) References cited:
**EP-A-0 078 446**
**EP-A-0 105 846**
**EP-A-0 115 260**
**DE-A-3 134 094**
**GB-A-1 484 420**
**GB-A-2 078 917**

**IRON AND STEEL ENGINEER, vol. 60, no. 4,
April 1983, pages 45-50, Pittsburgh, US; H.
WATANABE et al.: "Scrap preheater for electric
arc furnace"**

(73) Proprietor: **Fläkt Aktiebolag
Sickla Allé 13
S-131 34 Nacka (SE)**

(72) Inventor: **Uhlander, Ake
Kanelvägen 9
S-352 45 Växjö (SE)**

(74) Representative: **Eitle, Werner, Dipl.-Ing. et al
Hoffmann, Eitle & Partner Patentanwälte
Arabellastrasse 4
D-8000 München 81 (DE)**

Courier Press, Leamington Spa, England.

## Description

The present invention relates to a device for preheating of scrap in an electric arc steel furnace in accordance with the preamble to Claim 1.

Devices for preheating of scrap which is to be charged into an electric arc steel furnace are prior art knowledge. The scrap is preheated partly in order to save energy in the furnace and partly in order to dry the scrap and to get rid of any ice on the scrap which could cause severe accidents if it is brought into contact with melt metal.

Preheating of the scrap can be performed by supplying heat from a burner or by utilizing the hot furnace gases. The latter method is favourable from the standpoint of energy since by means heat recovery is ensured at the same time as the hot gases are cooled. Cooling is essential in order for the gases to be cleaned in a filter before being discharged into the atmosphere. When the hot furnace gases are utilized, this can be done by a direct method, the implication of which is that the exhaust gases are permitted to directly heat the scrap. A system based on this principle is described in an article entitled "Scrap preheater for electric arc furnace", IRON AND STEEL ENGINEER, April, 1983, pages 45-50. Similar systems are described in an article entitled "EF Update 82/Four scrap pre-heating system" 33 METAL PRODUCING, November 1982, pages 50-53. A common feature of these systems is that they have the disadvantage of impurities in the furnace gas deposited on the scrap and returned to the furnace. By this means, a concentration is formed, especially of certain impurities such as zinc, lead, tin, etc., which are gasified in the furnace and condensed on the scrap. In charging, enormous problems may arise with the discharge of dust in the furnace hall.

In order to deal with these disadvantages, an indirect method has also been proposed for scrap preheating. One such facility has been built by the Italian firm DANIELI. In the indirect method, the furnace gas is permitted to flow through a heat exchanger for heating of a drying gas which is then supplied to the scrap bed in order to preheat the scrap. Through the extensive ducting between the individual units enormous heat losses arise in the system, resulting in problems of sufficient heat recovery and thus heating of the scrap. Moreover, the heat exchanger and any associated ducting and insulation around the units result in a relatively high plant cost.

A further system is known from EP-A-0115260 in which the scrap container is located inside the heat exchanger in an integral unit. This eliminates the extensive ducting between individual units and reduces heat loss. This system has, however, disadvantages. The heat exchanger, which can become clogged by dirty exhaust gases from the electric arc furnace, can only be cleaned by dismantling the complete unit. Further, it is difficult to split the scrap container so that one part can be filled while the other is being preheated, without a considerable loss of heat.

The present invention relates to a facility according to the indirect method and has the objective of offering a device which does not display the disadvantages associated with the prior art systems. This is accomplished through a device in accordance with the characteristics of Claim 1. The invention is thus based on the realization that, by arranging the heat exchanger and scrap container in an integrated unit which outwards is limited by an insulated wall, the advantage is gained that the temperature level within the unit can be kept higher at the same time as ducting and associated insulation can be drastically reduced. Suitable embodiments are described in the accompanying subclaims. The second duct can thus consist of the space between the heat exchanger and the container, thus enabling ducting to be minimized. The ducts on the primary side of the heat exchanger are exposed to severe fouling and coating by the polluted furnace gases. According to Claim 3, the ducts in the heat exchanger for the furnace gas are made of straight, adjacent, parallel-disposed pipes, connected at their ends to collection boxes for connection to the primary inlet and primary outlet respectively. This gives the advantage that these ducts can easily be cleaned.

According to an embodiment described in Claim 4, the container is divided into two units disposed on either side of the heat exchanger. By this means, one container can be preheated while the other container is being charged with scrap or the scrap is being charged into the furnace.

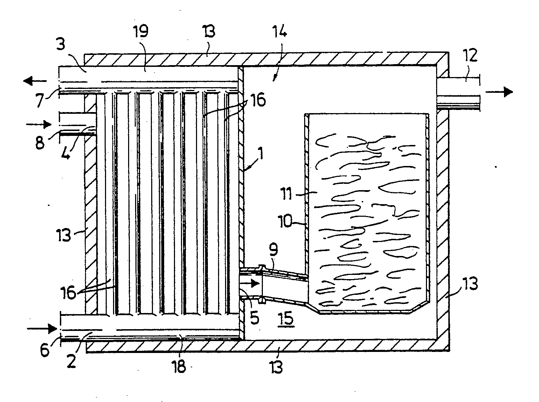

The invention will now be described in more detail and with reference to the accompanying drawing, which shows a schematic arrangement of a plant according to the invention.

On the drawing, reference numeral 1 designates a heat exchanger provided with a primary inlet 2 for hot furnace gas, a primary outlet 3 for cooled furnace gas, a secondary inlet 4 for cold drying gas, a secondary outlet 5 for heated drying gas, a first exhaust conduit 6 from the electric arc steel furnace to the primary inlet of the heat exchanger, a second exhaust conduit 7 from the primary outlet of the heat exchanger to a filter (not shown) for cleaning of the furnace gas, a first duct 8 for drying air to the secondary inlet of the heat exchanger, a second duct 9 for the drying air from the secondary outlet of the heat exchanger to a scrap bed 11 installed in a container 10, a third duct 12 for diversion of the drying gas leaving the container, the said gas being made to pass the scrap bed 11 while this is being heated. The heat exchanger 1 and container 10 are disposed adjacent to each other and provided with a common insulated wall 13 surrounding both units and forming an outwardly limited and insulated space 14 containing the second duct 9 in its entirety. According to one embodiment the second duct 9 comprises the free space 15 between the heat exchanger and the container. The ducts of heat exchanger 1 for the furnace air are appropriately composed of straight, adjacent, parallel-disposed pipes 16, connected at their ends to collecting boxes 18, 19 for connection to the primary inlet and primary outlet respectively.

According to one embodiment, the container 10 is divided into two units disposed on either side of the heat exchanger. This embodiment is not shown in the drawing. The wall 13 is also provided with suitable devices (not shown) to facilitate replacement of the scrap basket.

By designing one or both of the collecting boxes 18 and 19 openable it is simple to clean the then accessible pipes 16 with a suitable cleaning device.

**Claims**

1. A device for preheating of scrap which is to be charged into an electric arc steel furnace, comprising a heat exchanger (1) provided with a primary inlet (2) for hot furnace gas, a primary outlet (3) for cooled furnace gas, a secondary inlet (4) for cold drying gas, a secondary outlet (5) for heated drying gas, a first exhaust conduit (6) from the electric arc steel furnace to the primary inlet of the heat exchanger, a second exhaust conduit (7) from the primary outlet of the heat exchanger to a filter for cleaning of the furnace gas, a first duct (8) for drying air to the secondary inlet of the heat exchanger, a second duct (9) for drying air from the secondary outlet of the heat exchanger to a scrap bed (11) installed in a container (10), a third duct (12) for diversion of the drying gas leaving the container, the said gas being made to pass the scrap bed while this is being heated, characterized in that the heat exchanger (1) and the container (10) are provided with a joint insulated wall (13) surrounding both units and forming an outwardly limited and insulated space (14) enclosing the second duct (9) in its entirety, and said container (10) is disposed outside but adjacent to the said heat exchanger (1).

2. A device according to Claim 1, characterized in that the second duct (9) consists of the free space (15) between the heat exchanger (1) and the container (10).

3. A device according to Claim 1 or Claim 2, characterized in that heat exchanger ducts for furnace gas are composed of straight, adjacent, parallel-disposed pipes (16), at their ends connected to collecting boxes (18, 19) for connection to the primary inlet and primary outlet respectively.

4. A device according to Claim 3, characterized in that the container (10) is divided into two units disposed on either side of the heat exchanger (1).

**Patentansprüche**

1. Vorheizvorrichtung für Schrott, mit dem ein elektrischer Lichtbogen-Stahlschmelzofen beschickt wird, mit einem Wärmetauscher (1), der mit einem primären Einlaß (2) für heißes Schmelzofengas, einem primären Auslaß (3) für gekühltes Schmelzofengas, einem sekundären Einlaß (4) für kaltes Trocknungsgas, und einem sekundären Auslaß (5) für aufgeheiztes Trocknungsgas ausgestattet ist, einem ersten Auslaßkanal (6) von dem elektrischen Lichtbogen-Stahlschmelzofen zu dem primären Einlaß des Wärmetauschers, einem zweiten Auslaßkanal (7), von dem primären Auslaß des Wärmetauschers zu einem Filter zur Reinigung des Schmelzofengases, einer ersten Rohrleitung (8) für Trocknungsluft zu dem sekundären Einlaß des Wärmetauschers, einer zweiten Rohrleitung (9) für Trocknungsluft von dem sekundären Auslaß des Wärmetauschers zu einem Schrottbett (11), das in einem Behälter (10) eingerichtet ist, einer dritten Rohrleitung (12) für die Ableitung des Trocknungsgases, das den Behälter verläßt, wobei das Gas durch das Schrottbett geführt wird, während dies aufgeheizt wird, dadurch gekennzeichnet, daß der Wärmetauscher (1) und der Behälter (10) mit einer verbindungsisolierten Wand (13) ausgestattet sind, die beide Einheiten umgibt und einen nach außen begrenzten und isolierten Raum (14) bildet, der die zweite Rohrleitung (9) in ihrer Gesamtheit einschließt und der Behälter (10) außerhalb aber benachbart zu dem Wärmetauscher (1) angeordnet ist.

2. Vorrichtung nach Anspruch 1, dadurch gekennzeichnet, daß die zweite Rohrleitung (9) aus dem Freiraum (15) zwischen dem Wärmetauscher (1) und dem Behälter (10) besteht.

3. Vorrichtung nach Anspruch 1 oder 2, dadurch gekennzeichnet, daß die Wärmetauscher-Rohrleitungen für Schmelzofengas zusammengesetzt sind aus geraden benachbarten parallel angeordneten Rohren (16), die an ihren Enden an Sammelkästen (18, 19) angeschlossen sind, zum Anschluß an den primären Einlaß bzw. den primären Auslaß.

4. Vorrichtung nach Anspruch 3, dadurch gekennzeichnet, daß der Behälter (10) in zwei Einheiten geteilt ist, die jeweils auf einer Seite des Wärmetauschers (1) angeordnet sind.

**Revendications**

1. Dispositif pour le préchauffage de ferrailles à charger dans un four d'aciérie électrique à arc, comprenant un échangeur de chaleur (1) comportant un orifice primaire (2) d'admission pour les gaz de four chauds, un orifice primaire (3) de sortie pour les gaz de four refroidis, un orifice secondaire (4) d'admission pour les gaz froids de séchage, un orifice secondaire (5) de sortie pour les gaz chauffés de séchage, un premier conduit (6) d'évacuation partant du four d'aciérie électrique à arc vers l'orifice primaire d'admission de l'échangeur de chaleur, un second conduit (7) d'évacuation partant de l'orifice primaire de sortie de l'échangeur de chaleur vers un filtre pour le nettoyage des gaz du four, un premier conduit (8) pour sécher l'air à l'orifice secondaire d'admission de l'échangeur de chaleur, un deuxième conduit (9) pour sécher l'air venant de l'orifice secondaire de sortie de l'échangeur de chaleur et allant vers un lit de ferrailles (11) installé dans un conteneur (10), un troisième conduit (12) pour la déviation des gaz de séchage quittant le conteneur, lesdits gaz étant destinés à traverser le lit de ferrailles pendant que celui-ci est chauffé, caractérisé par le fait que l'échangeur de chaleur (1) et le conteneur (10) présentent une paroi d'isolation (13) entourant les deux unités et formant un espace (14) limité à l'extérieur et isolé, englobant le deuxième conduit (9) dans sa totalité, et ledit conteneur (10) est disposé à l'extérieur dudit échangeur de chaleur (1), mais adjacent à celui-ci.

2. Dispositif selon la revendication 1, caractérisé par le fait que le deuxième conduit (9) est constitué de l'espace libre (15) entre l'échangeur de chaleur (1) et le conteneur (10).

3. Dispositif selon les revendications 1 ou 2, caractérisé par le fait que les conduits dans l'échangeur de chaleur pour les gaz de four sont composés de tubes (16) droits, adjacents et disposés parallèlement, reliés à leurs extrémités à des boîtes collectrices (18, 19) pour connexion avec l'orifice primaire d'admission et l'orifice primaire de sortie respectivement.

4. Dispositif selon la revendication 3, caractérisé par le fait que le conteneur (10) est divisé en deux unités disposées de chaque côté de l'échangeur de chaleur (1).